# EUROPÄISCHE PATENTANMELDUNG

(11) **EP 3 982 017 A1**
(43) Veröffentlichungstag der Anmeldung: **13.04.2022**
(21) Anmeldenummer: 21193729.7
(22) Anmeldetag: 30.08.2021
(51) Int. Cl.: F16K 1/00, F16K 7/12

(54) **MEMBRANANORDNUNG MIT VERSTAERKUNGSELEMENTEN**

(30) Priorität: 06.10.2020 DE 102020126105
(71) Anmelder: SISTO Armaturen S.A., 6468 Echternach (LU)
(72) Erfinder: SCHAAL, Andreas, 6468 Echternach (LU); DIECKMANN, Thomas, 6468 Echternach (LU); HACKENBERGER, Bernd, 6468 Echternach (LU)
(74) Vertreter: Busch, Tobias

(57) **Zusammenfassung**

Membrananordnung mit einer Membran (5), die Räume voneinander dichtend trennt. Die Membran (5) umfasst eine Membranschraube (14). Die Membran (5) weist Verstärkungselemente (13) auf.

## Beschreibung

Die Erfindung betrifft eine Membrananordnung mit einer Membran, die Räume voneinander dichtend trennt, wobei die Membran eine Membranschraube umfasst.

Solche Membranen werden beispielsweise in Membranventilen, Membranantrieben oder Membranpumpen eingesetzt. Bei Membranventilen dichtet die Membran das Ventil vorzugsweise auf einem Dichtsteg ab. Ein solches Membranventil wird beispielsweise in der DE 195 05 747 A1 beschrieben. Bei einer Membranpumpe wird das zu fördernde Medium durch die Membran vom Antrieb getrennt. Membranantriebe kommen beispielsweise in Form pneumatischer Antriebe bei Stellarmaturen zum Einsatz. Dabei wird vorzugsweise eine mit einer Spindel gekoppelte Membran über Druckluft bewegt.

Membranventile können zur Dosierung von unterschiedlichen Fluiden eingesetzt werden, beispielsweise von Gasen, Dämpfen oder Flüssigkeiten. Beispielgebend können Membranventile eingesetzt werden, um hochviskose bzw. sehr stark haftfähige Medien zu dosieren bzw. zu verteilen. Bei Membranventilen wird dabei wirksam eine Ablagerung und somit auch eine Kontamination verhindert. Ventile auf Basis des Membranprinzips sind die totraumärmsten Dosierarmaturen. Neben dem sehr geringen Totraumvolumen sind Membranventile zudem entleerungsoptimiert konstruiert, sodass eine rückstandsfreie Entfernung des Mediums ermöglicht wird.

Dies ist insbesondere bei pharmazeutischen Anlagen und Fertigungsprozessen von großer Bedeutung, da diese den hohen Ansprüchen einer strengen Validierung unterliegen, mit dem Ziel, eine gleichbleibende und reproduzierbare Qualität zu gewährleisten. Aus diesen Ansprüchen resultiert die Notwendigkeit, verschiedene Prozesse innerhalb einer Anlage fahren zu können. Neben dem eigentlichen Produktionsprozess sind dies in der Regel die Reinigung, Desinfektion und Sterilisation der Anlage. Membranventile haben sich aufgrund ihrer vorteilhaften Konstruktionsmerkmale als bevorzugte Armatur in der sterilen Prozesstechnik etabliert.

Ein wichtiges Qualitätsmerkmal einer Membran ist deren Beweglichkeit, das heißt die Fähigkeit senkrecht zur Einspannfläche (Membranfläche) einen Hub auszuführen, der mechanisch angetrieben bedingt sein kann. Weiterhin ist die Beständigkeit der Membran von Bedeutung, insbesondere wenn aggressive Medien gefördert werden.

Die Bewegungsfähigkeit und Beständigkeit einer Membran hängt im Wesentlichen vom Werkstoff ab, aus dem die Membran besteht. Als Grundwerkstoffe für Membranen werden hauptsächlich Elastomere verwendet, die zur Erzielung einer höheren Festigkeit mit Gewebeeinlagen verstärkt werden können. Als Elastomere haben sich Membranen mit Ethylen-Propylen-Dien-Kautschuk (EPDM) bewährt. Bei Ethylen-Propylen-Dien-Kautschuk (EPDM) handelt es sich um terpolymere Elastomere (Gummi) und somit um synthetische Kautschuke. Das Material zeichnet sich durch eine hohe Elastizität und gute chemische Beständigkeit aus.

In der EP 3 324 084 A1 ist eine Membran für ein Membranventil offenbart, die einen inneren Bereich mit geringerer Härte und einen äußeren Bereich mit höherer Härte aufweist. Durch diese Komposit-Membran wird eine Fehlmontage vermieden und eine längere Lebensdauer erzielt.

Die EP 3 323 583 A1 beschreibt ein Verfahren zur Herstellung einer Membran und eine Membran selbst, bei der zwischen zwei Elastomer-Lagen formschlüssig eine Gewebeeinlage und eine Membranschraube integriert sind. Diese Membran wird über ein Spritzgießverfahren hergestellt, welches eine gleichbleibende Membranqualität realisiert.

Die Beständigkeit der Membran beim Einsatz von Membranventilen im Vakuumbetrieb bzw. beim Betrieb bei Unterdruck ist trotz der Gewebeverstärkung begrenzt. Nach überschaubarer Einsatzzeit können sich im Bereich um die Membranschraube Risse bilden, bis die Membran nach kurzer Zeit von der Membranschraube abreist. Im ungünstigsten Fall kann es zu einem Medienaustritt kommen. Die schadhafte Membran muss ersetzt werden, was zu Maschinen- und Anlagenstillständen mit entsprechenden ökonomischen Einbußen führt.

Aufgabe der Erfindung ist es, eine Membrananordnung mit einer Membran bereitzustellen, die Räume voneinander dichtend trennt und dabei eine belastungsoptimierte Verbindung zwischen Betätigungselement und Membranwerkstoff aufweist. Darüber hinaus soll die Membran den Anforderungen des Vakuumbetriebes bzw. des Betriebs bei Unterdruck gerecht werden und dabei funktionale Eigenschaften während der Einsatzzeit bewahren. Die Membran soll sich auf möglichst preiswerte sowie besonders einfache Weise und mit einem möglichst geringen Materialausschuss herstellen lassen. Dabei soll sich die Membran durch eine hohe Lebensdauer auszeichnen.

Diese Aufgabe wird erfindungsgemäß durch eine Membrananordnung gemäß den Merkmalen des Anspruchs 1 gelöst. Bevorzugte Varianten sind den Unteransprüchen, der Beschreibung und den Figuren zu entnehmen.

Erfindungsgemäß weist die Membran der Membrananordnung Verstärkungselemente auf. Vorzugsweise sind die Verstärkungselemente als Stege ausgebildet, die sich radial von der Membranschraube an den Membranrand erstrecken.

Idealerweise bilden die Verstärkungselemente untereinander und mit der Membranschraube eine einstückige Struktur aus. Diese Struktur kann mit radial verlaufenden, dünnen Seitenarmen trichterähnlich sein. In einer vorteilhaften Ausgestaltung der Erfindung ist die Struktur spinnennetzförmig ausgestaltet, so dass die radial verlaufenden Stege mit Ringen einstückig ausgebildet sind. Dabei kann die Anzahl der Ringe variieren. In einer einfachen Variante münden die radialen Stege in einem äußeren Ring. Wird die Membran häufigen Schaltzyklen und Vakuumbetrieb unterworfen, kann die Struktur aus Verstärkungselementen mit bis zu zehn Zwischenringen verstärkt sein.

Vorteilhafterweise beträgt die Breite der radialen Stege mehr als 1 mm, vorzugsweise mehr als 1,5 mm, insbesondere mehr als 2 mm, und aber weniger als 14 mm, vorzugsweise weniger als 12 mm, insbesondere weniger als 10 mm. Erfindungsgemäß beträgt die Höhe der Stege und Ringe mehr als 1 mm, vorzugsweise mehr als 1,5 mm, insbesondere mehr als 2 mm, und aber weniger als 10 mm, vorzugsweise weniger als 8 mm, insbesondere weniger als 6 mm. Dabei kann der Querschnitt der Stege und Ringe rund, dreieckig, rechteckig oder quadratisch ausgebildet sein.

Gemäß der Erfindung ist die einstückige Struktur der Verstärkungselemente von zwei Lagen eines Elastomers umschlossen, die mittels Vulkanisation miteinander verbunden sind. Vorzugsweise werden bei der Vulkanisation die Elastomer-Lagen mit Peroxiden vernetzt. Alternativ kann Ethylen-Propylen-Dien-Kautschuk (EPDM) ggf. auch Schwefel bzw. aus Schwefel verwertete Stoffe, wie zum Beispiel Schwefeldifluorid, Katalysatoren bzw. Zinkoxid oder Fettsäuren enthalten. Die Vulkanisation erfolgt meist mit einem Schwefelanteil von 1,8 bis 2,5 Gew.-% und einer Temperatur von ca. 120 bis 160°C. Dabei werden die langkettigen Kautschukmoleküle durch Peroxidbindungen oder Schwefelbrücken vernetzt. Hierdurch gehen die plastischen Eigenschaften des Kautschuks bzw. der Kautschukmischung verloren und der Stoff wird mittels des Verfahrens der Vulkanisation vom plastischen in den elastischen Zustand überführt. In der Regel ist die Elastizität des Gummiwerkstoffs abhängig von der Anzahl der Peroxidbindungen oder Schwefelbrücken. Je höher der Vernetzungsgrad, desto härter ist der Gummi. Die Anzahl der Bindungen ist wiederum abhängig von der zugesetzten Menge des vernetzenden Stoffes und der Dauer der Vulkanisation.

In einer vorteilhaften Variante weisen die radialen Stege Aussparungen zur Erzeugung einer formschlüssigen Verbindung mit den EPDM-Lagen auf. Vorzugsweise sind die Aussparungen rund, dreieckig, rechteckig oder quadratisch. In einer alternativen Variante der Erfindung können auch die Verstärkungsringe und der äußere Ring diese Aussparungen aufweisen. Die formschlüssige Verbindung kann durch den Einsatz sogenannter Haftvermittler unterstützt werden.

Zur Erzielung einer belastungsoptimierten formschlüssigen Verbindung zwischen Elastomer-Werkstoff und Verstärkungselementen kann auch der Schraubenteller der Membranschaube Aussparungen aufweisen und/oder die radialen Stege können Rillen aufweisen und/oder der Schraubenteller kann eine angepasste Kontur aufweisen. Aufgrund der genannten Optimierungen wird eine Verbindung zwischen dem Membranwerkstoff und der Membranschraube mit der einstückig ausgebildeten Struktur aus Verstärkungselementen erzeugt, die einen langlebigen Einsatz von Membranventilen in Rohrleitungen mit Unterdruck ermöglicht.

In einer vorteilhaften Variante weisen die zwei über dem Dichtsteg des Ventils verlaufenden Verstärkungselemente keilförmige Elemente zur Verbesserung der Abdichtung der Membran auf. Der Querschnitt des Stegs ist dann zur Medienoberfläche hin vorzugsweise keilförmig ausgebildet. Darüber hinaus sind auch weitere Querschnitte mit dichtender Funktion denkbar, wie beispielsweise trapezförmig, trichterförmig und dreiecksförmig etc. Dadurch wird die zur Abdichtung des Ventils notwendige Flächenpressung erhöht. Die sonst übliche Erhöhung der Membranoberfläche in Form einer Dichtlippe kann dadurch entfallen, da die Erhöhung der Pressung durch die Dichtelemente des Stegs erfolgt. Somit kann zur Abdichtung des Ventils auf eine sichtbare Dichtlippe verzichtet werden.

In einer besonders vorteilhaften Variante weisen auch die beiden Verstärkungselemente senkrecht dazu diese keilförmigen Elemente zur Abdichtung auf, sodass eine kreuzförmige Struktur aus Dichtelementen entsteht. Eine Membran mit einer solchen Struktur an Verstärkungselementen kann demnach in beliebiger Orientierung um 90° verdreht im Ventil eingebaut werden. Sie besitzt somit einen Schutz vor Falscheinbau, da die üblicherweise notwendige Positionierung der Dichtlippe über dem Dichtsteg entfällt.

Darüber hinaus kann auch der äußere Ring über Elemente zur Erhöhung der Abdichtung verfügen. Somit kann zur Abdichtung des Ventils nach außen ebenfalls auf eine sichtbare Dichtlippe verzichtet werden. Es entsteht eine flache Membran ohne vorstehende Dichtlippen. Dies verbessert die in der sterilen Verfahrenstechnik wichtige Reinigungseigenschaft der Membran.

Üblicherweise werden die erfindungsgemäßen Membrananordnungen mit den Verstärkungselementen mittels Formpressen (Compression Moulding) hergestellt. Das Formpressen ist ein Herstellungsverfahren für leicht gewölbte oder flache Bauteile. Dabei können auch thermoplastische Kunststoffe bzw. Elastomere verarbeitet werden. Zu Beginn des Verfahrens wird eine Formmasse, die in diesem Fall mindestens zwei Elastomer-Lagen und eine dazwischen angeordnete, einstückige Struktur aus Verstärkungselementen inklusive Membranschraube umfasst, in eine Kavität eingebracht, welche aufgeheizt wird. Anschließend wird die Kavität unter Einsatz eines Druckkolbens geschlossen. Durch den Druck erlangt die Formmasse die vom Werkzeug vorgegebene Form. Der anschließend unter Temperatureinwirkung stattfindende Vulkanisationsprozess verleiht dem Elastomerbauteil seine gewünschte Form und die gummielastischen Eigenschaften. Nach dem Abkühlen kann das fertige Bauteil aus dem Formwerkzeug entnommen und nach- bzw. weiterverarbeitet werden.

In einer vorteilhaften Variante kann die Membrananordnung mit Verstärkungselementen auch über das Spritzgieß-Verfahren hergestellt werden. Das Spritzgießen ist dann möglich, wenn die Verstärkungselemente auch den Einspannrahmen umfassen, da somit die Positionierung der Verstärkungsstruktur innerhalb der Kavität gewährleistet ist. Das Spritzgießen (Injection-Moulding) ist ein Verfahren, bei dem mit einer Spritzgießmaschine der jeweilige Elastomer-Werkstoff verflüssigt (plastifiziert) wird und in eine Form, dem Spritzgusswerkzeug unter Druck eingespritzt wird, in dem die Struktur aus Verstärkungselementen bereits angeordnet ist. Im Werkzeug geht der Elastomer-Werkstoff durch eine Vernetzungsreaktion in den festen Zustand über. Nach dem Öffnen des Werkzeugs kann das Fertigteil, die Membran mit integrierten Verstärkungselementen, entnommen werden. Der Hohlraum, die Kavität, des Werkzeugs bestimmt dabei die Form und die Oberflächenstruktur des fertigen Teiles.

Gemäß der Erfindung sind die Verstärkungselemente, die vorzugsweise als radiale Stege ausgeführt sind, mit der Membranschraube einstückig ausgebildet. Insbesondere beim Vakuumbetrieb der Membran hält die einstückige Ausbildung der Membranschraube mit der Struktur aus Verstärkungselementen den enormen Kräften stand und verhindert wirksam ein Ausreisen der Membranschraube aus der Membrananordnung.

Vorteilhafterweise weist die Membran mehr als drei, vorzugsweise mehr als vier, insbesondere mehr als fünf, radiale Stege auf. Bei der Ausgestaltung der Verstärkungselemente in Form eines Spinnennetzes können auch bis zu zwölf radiale Stege ausgebildet sein.

In einer besonders elastischen Variante der Erfindung sind die radialen Stege in ihrer radialen Erstreckung verzweigt. Vorzugsweise weisen diese Verzweigungen mindestens einen Bogen, idealerweise zwei oder drei Bögen auf. Diese Bögen beschreiben jeweils einen Winkel von mehr als 90 °, vorzugsweise mehr als 120 °, insbesondere mehr als 150 °. Diese elastische Ausgestaltung der Membrananordnung zeichnet sich durch eine hervorragende Langlebigkeit im Vakuumbetrieb des Membranventils aus.

In einer weiteren Variante der Erfindung sind die Verstärkungselemente bzw. die Struktur der Verstärkungselemente und der Einspannrahmen der Membrananordnung einstückig ausgebildet. Aufgrund der Einstückigkeit von der Membranschraube über die Verstärkungselemente bis zum Einspannrahmen ist die Membrananordnung besonders stabil ausgestaltet und gegen Rissbildung während des Vakuumbetriebs geschützt.

In einer alternativen Ausgestaltung der Erfindung weisen die Verstärkungselemente eine konzentrische, kreisförmige Erstreckung von der Membranschraube bis zu einem äußeren Verstärkungsring auf. Dabei verlaufen vorzugsweise vier runde Stege in kreisförmigen Bahnen von innen nach außen. In einer alternativen Variante können zwei bis acht Stege in spiralförmigen Bahnen von innen nach außen verlaufen. Weiterhin ist auch eine mehrgängige Spiralform der Stege erfindungsgemäß. Eine solche Membrananordnung zeichnet sich durch eine hervorragende Elastizität aus.

Vorteilhafterweise sind die Membranschraube und die Verstärkungselemente aus einem metallischen Werkstoff oder vorzugsweise aus einem Hochleistungskunststoff, technischem Kunststoff und/oder Konstruktionskunststoff gebildet. In einer alternativen Variante der Erfindung ist eine Werkstoffkombination aus einem metallischen Werkstoff und einem Kunststoff vorgesehen. Dabei wird ein metallisches Bauteil in einem Spritzgussverfahren ausgegossen. Gemäß der Erfindung wird die einstückige Struktur der Verstärkungselemente durch Urformen angefertigt. Dazu wird die Vorrichtung aus Kunststoff, vorzugsweise aus Hochleistungskunststoff, gegossen oder mittels generativen Verfahren, wie beispielsweise einem aufbauenden Schmelzschicht-Verfahren, hergestellt. Hochleistungskunststoffe sind eine Untergruppe der thermoplastischen Kunststoffe, die sich besonders durch ihre Temperatur- und Chemikalienbeständigkeit bei gleichzeitig verbesserten mechanischen Eigenschaften auszeichnen. Des Weiteren sind sie elektrische Nichtleiter. Beispiele hierfür sind Polyetherketone, Polyetheretherketone, Polyphenylensulfide, Polybutylenterephthalat und Polyamide.

Weitere Merkmale und Vorteile der Erfindung ergeben sich aus der Beschreibung von Ausführungsbeispielen anhand von Zeichnungen und aus den Zeichnungen selbst.

Dabei zeigt:
- Figur 1: eine Schnittdarstellung eines Membranventils,
- Figur 2: eine teilgeschnittene Membran mit Verstärkungselementen,
- Figur 3: eine Draufsicht auf eine aus Verstärkungselementen gebildete Struktur,
- Figur 4: eine perspektivische Ansicht einer aus Verstärkungselementen gebildeten Struktur,
- Figur 5: eine perspektivische Ansicht einer aus Verstärkungselementen gebildeten Struktur mit Einspannrahmen,
- Figur 6: eine Draufsicht auf eine aus Verstärkungselementen gebildete Struktur mit Verzweigungen und Bögen,
- Figur 7: eine perspektivische Ansicht einer aus Verstärkungselementen gebildeten Struktur,
- Figur 8: eine perspektivische Ansicht der Struktur aus Verstärkungselementen mit keilförmigen Dichtelementen,
- Figur 9: eine Schnittdarstellung eines Verstärkungselements.

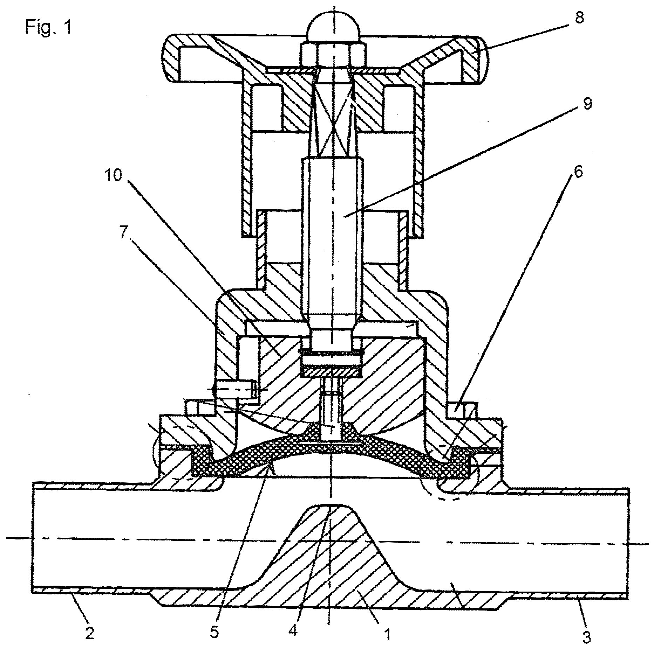

Das in Figur 1 dargestellte Membranventil besitzt ein Gehäuseunterteil 1, welches Anschlüsse 2, 3 und ein Wehr 4 umfasst. Das Wehr 4 dient als Sitzfläche für die Membran 5. Die Membran 5 ist mithilfe von Schrauben 6 eingespannt zwischen dem Gehäuseunterteil 1 und einem Gehäuseoberteil 7. Im Gehäuseoberteil 7 sind die zur Betätigung der Membran 5 notwendigen Elemente integriert, wie beispielsweise ein Antrieb 8, der im Ausführungsbeispiel als Handrad ausgeführt ist, sowie eine Spindel 9. An der Spindel 9 ist ein Druckstück 10 befestigt. Das Druckstück 10 ist verschieblich im Gehäuseoberteil 7 angeordnet und wird von einer inneren Wand des Gehäuseoberteils 7 geführt. Durch Betätigung des Antriebs 8 wird über die Spindel 9 eine vertikale Verschiebung des Druckstücks 10 bewirkt, sodass sich die Membran 5 verformt und der freie Querschnitt zwischen dem Wehr und der Membrananordnung vergrößert bzw. verkleinert werden kann.

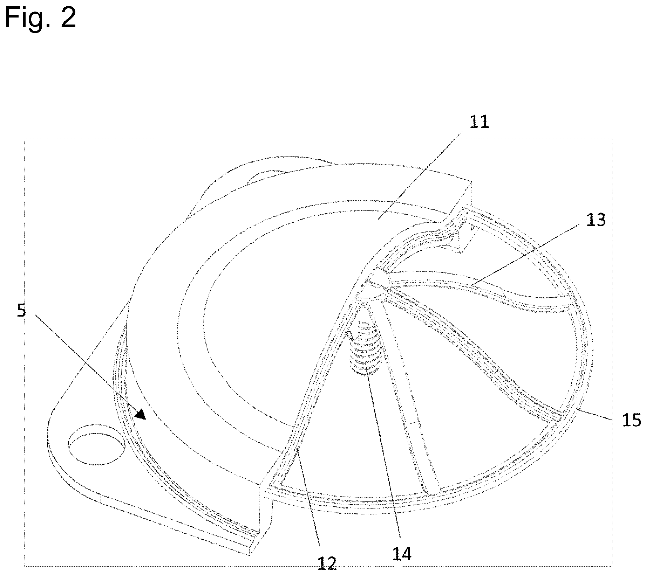

Figur 2 zeigt eine teilgeschnittene Membran 5 mit Verstärkungselementen 13. Die Membran 5 umfasst eine erste Lage 11, die auf der Mediumseite angeordnet ist. Weiterhin umfasst die Membran 5 eine zweite Lage 12, welche die Rückseite der Membrananordnung bildet. Die beiden Lagen 11 und 12 sind aus einem Elastomer, insbesondere EPDM, gefertigt. Zwischen den beiden EPDM-Lagen 11, 12 sind die Verstärkungselemente 13 angeordnet. Weiterhin umfasst die Membran 5 ein stiftartiges Element 14, das im Ausführungsbeispiel als Membranschraube ausgebildet ist.

Das in Figur 2 dargestellte stiftartige Element 14 kann ein Gewinde aufweisen. Gemäß der Darstellung in Figur 1 ist das stiftartige Element 14 als Membranschraube ausgebildet und weist ein Außengewinde auf, das in ein Innengewinde eingeschraubt wird, welches in einem Druckstück 10 ausgebildet ist. Bei der Membran 5 gemäß der Darstellung in Figur 2 handelt es sich um einen Aufbau aus zwei EPDM-Lagen 11, 12 und einer dazwischen angeordneten Struktur aus Verstärkungselementen 13, die durch Vulkanisation miteinander verbunden sind. Die Verstärkungselemente 13 erstrecken sich von der Membranschraube 14 ausgehend bis zu einem ringförmigen Element 15, das in diesem Ausführungsbeispiel als abschließender Verstärkungsring ausgebildet ist. Die Membranschraube 14, die Verstärkungselemente 13 und das ringförmige Element 15 sind einstückig ausgebildet und können beispielgebend über ein Spritzgussverfahren oder ein generatives Verfahren aus einem Hochleistungskunstoff bzw. Metall-Werkstoff gefertigt sein.

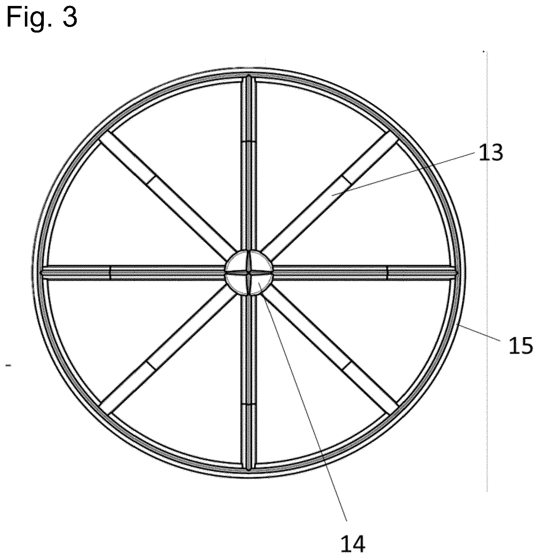

Figur 3 zeigt eine Draufsicht auf eine aus Verstärkungselementen 13 gebildete einstückige Struktur. Die Verstärkungselemente 13 erstrecken sich von der Membranschraube 14 ausgehend bis zu einem ringförmigen Element 15, das in diesem Ausführungsbeispiel als abschließender Verstärkungsring ausgebildet ist. Dabei weist die Struktur aus Verstärkungselementen 13 mehr als drei, vorzugsweise mehr als vier, insbesondere mehr als fünf, Verstärkungselemente 13 auf.

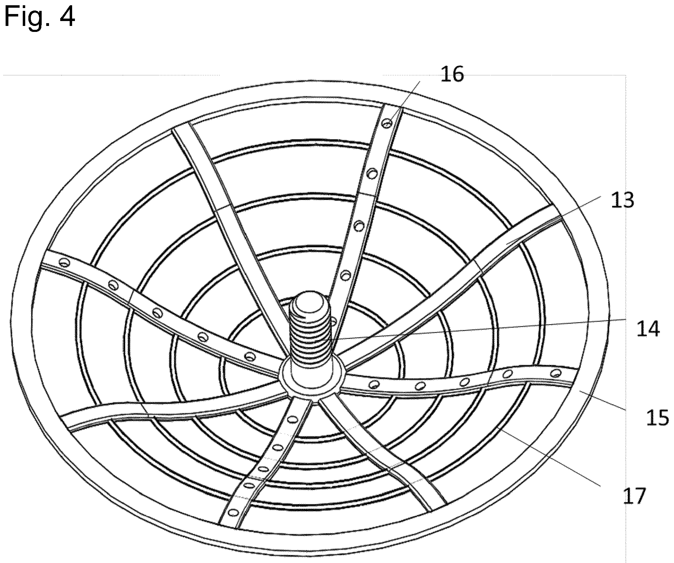

Figur 4 zeigt eine perspektivische Ansicht einer aus Verstärkungselementen 13 gebildeten Struktur. In diesem Ausführungsbeispiel erstrecken sich acht Verstärkungselemente 13 von der Membranschraube 14 bis zu einem ringförmigen Element 15. Dazwischen sind einige Verstärkungsringe 17 angeordnet, so dass sich eine spinnennetzförmige Struktur bildet. An einigen Verstärkungselementen 13 sind Aussparungen 16 zur Erzeugung einer formschlüssigen Verbindung mit den EPDM-Lagen, die in dieser Figur nicht dargestellt sind, angeordnet. In anderen Varianten der Erfindung können diese Aussparungen 16 nur an einem Verstärkungselement 13 oder an allen Verstärkungselementen 13 angeordnet sein. In einer vorteilhaften Variante der Erfindung sind die Aussparungen 16 auch an den Verstärkungsringen 17 vorgesehen. Der Querschnitt der Verstärkungselemente 13 und der Verstärkungsringe kann prinzipiell rund, dreieckig, rechteckig oder quadratisch ausgebildet sein. In dem in Figur 4 gezeigten Ausführungsbeispiel sind die Verstärkungselemente 13 sowie das ringförmige Element 15 rechteckig und die Verstärkungsringe 17 rund ausgebildet. Die Verstärkungselemente 13 weisen eine Breite von mehr als 1 mm, vorzugsweise mehr als 1,5 mm, insbesondere mehr als 2 mm, und aber weniger als 14 mm, vorzugsweise weniger als 12 mm, insbesondere weniger als 10 mm, auf. Die Höhe der Verstärkungselemente 13 beträgt mehr als 1 mm, vorzugsweise mehr als 1,5 mm, insbesondere mehr als 2 mm, und aber weniger als 10 mm, vorzugsweise weniger als 8 mm, insbesondere weniger als 6 mm.

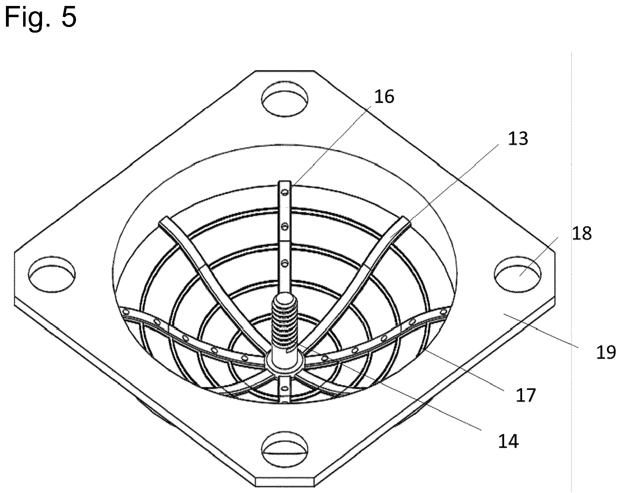

Figur 5 zeigt eine perspektivische Ansicht einer aus Verstärkungselementen 13 gebildeten Struktur, die mit Einspannrahmen 19 einstückig ausgebildet ist. Die aus Verstärkungselementen gebildete Struktur entspricht der Struktur aus Figur 4. Zur Einspannung in das Membranventil und zur Fixierung mit den hier nicht dargestellten Schrauben sind die Löcher 18 ausgespart.

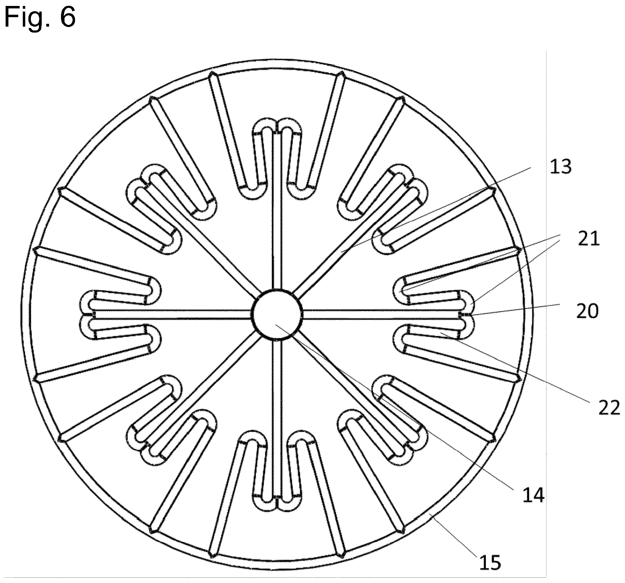

Figur 6 zeigt eine Draufsicht auf eine aus Verstärkungselementen 13 gebildete Struktur mit Verzweigungen 20 und Bögen 21. In diesem Ausführungsbeispiel erstrecken sich acht Verstärkungselemente 13 von der Membranschraube 14 bis zu einem ringförmigen Element 15. Die Verstärkungselemente 13 weisen Verzweigungen 20 auf, so dass aus einem Verstärkungselement 13 zwei verzweigte Verstärkungselemente 22 entspringen. Die verzweigten Verstärkungselemente weisen in dem in Figur 6 gezeigten Ausführungsbeispiel zwei Bögen 21 auf. Dadurch erstreckt sich ein Verstärkungselement 13 von der Membranschraube 14 ausgehend, verzweigt sich in zwei verzweigte Verstärkungselemente 22, die durch die Bögen 21 schlaufenförmig rückgeführt werden, bis diese in einem äußeren ringförmigen Element 15 münden. Die auf diese Weise ausgebildete Struktur, die dann zwischen zwei EPDM-Lagen der Membran eingebettet ist, zeichnet sich durch ein besonders elastisches Verhalten aus.

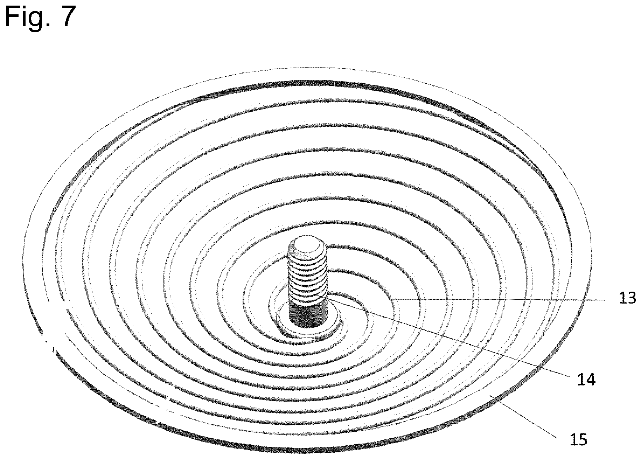

Figur 7 zeigt eine perspektivische Ansicht einer aus Verstärkungselementen 13 gebildeten Struktur. In diesem Ausführungsbeispiel ziehen vorzugsweise vier Verstärkungselemente 13 von der Membranschraube 14 ausgehend spiralförmige Kreise bis zu einem äußeren ringförmigen Element 15. In einer alternativen Variante können auch 2 bis 8 Verstärkungselemente eine spiralförmige Struktur ausbilden. Die in Figur 7 dargestellte Struktur ist einstückig aus einem Hochleistungskunststoff ausgebildet.

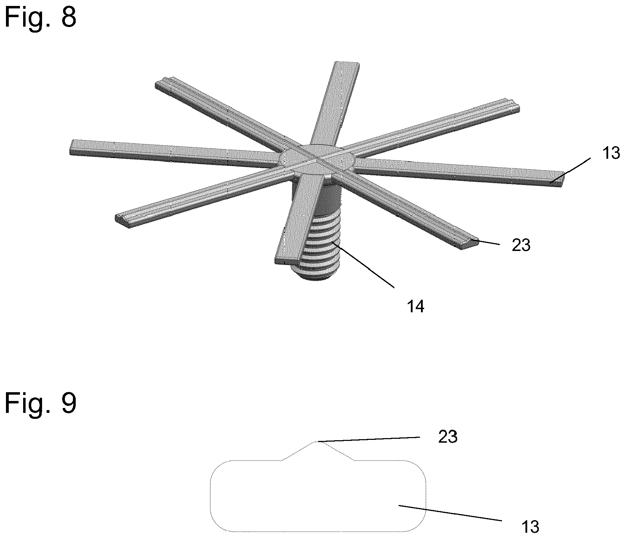

Figur 8 zeigt eine perspektivische Ansicht der einstückigen Struktur aus Verstärkungselementen 13 mit keilförmigen Dichtelementen 23. Die Verstärkungselemente 13 erstrecken sich von der Membranschraube 14 ausgehend bis zu einem nicht dargestellten ringförmigen Element. Dabei weist die Struktur aus Verstärkungselementen 13 mehr als drei, vorzugsweise mehr als vier, insbesondere mehr als fünf, Verstärkungselemente 13 auf. An vier über den Dichtsteg des Ventils verlaufenden Verstärkungselementen 13 sind zur Verbesserung der Abdichtung der Membran keilförmige Elemente 23 angeordnet. Dadurch wird die zur Abdichtung des Ventils notwendige Flächenpressung der Membran 5 erhöht. Die sonst übliche Erhöhung der Membranoberfläche in Form einer Dichtlippe kann dadurch entfallen. In einer besonders vorteilhaften Variante weisen die jeweils 90° versetzen Verstärkungselemente 13 die keilförmigen Elemente zur Abdichtung auf, so dass eine kreuzförmige Struktur aus Dichtelementen entsteht. Eine Membran 5 mit einer solchen Verstärkungselementenstruktur kann demnach in beliebiger Orientierung um 90° verdreht im Ventil eingebaut werden. Die üblicherweise notwendige Positionierung der Dichtlippe über dem Dichtsteg entfällt, da diese Membran 5 nicht falsch eingebaut werden kann.

Figur 9 zeigt eine Schnittdarstellung eines Verstärkungselements 13. An einer breiten Seite des Verstärkungselements 13 ist ein keilförmiges Element 23 zur Abdichtung der Membran 5 sowie als Dichtlippenersatz angeordnet.

## Patentansprüche

1. Membrananordnung mit einer Membran (5), die Räume voneinander dichtend trennt, wobei die Membran (5) eine Membranschraube (14) umfasst, **dadurch gekennzeichnet, dass** die Membran (5) Verstärkungselemente (13) aufweist.

2. Membrananordnung nach Anspruch 1, **dadurch gekennzeichnet, dass** die Verstärkungselemente (13) als Stege ausgebildet sind.

3. Membrananordnung nach Anspruch 1 oder 2, **dadurch gekennzeichnet, dass** die Verstärkungselemente (13), vorzugsweise zusammen mit der Membranschraube (14), eine einstückige Struktur bilden.

4. Membrananordnung nach einem der Ansprüche 1 bis 3, **dadurch gekennzeichnet, dass** die Verstärkungselemente (13) eine Breite von mehr als 1 mm, vorzugsweise mehr als 1,5 mm, insbesondere mehr als 2 mm, und aber weniger als 14 mm, vorzugsweise weniger als 12 mm, insbesondere weniger als 10 mm, aufweisen.

5. Membrananordnung nach einem der Ansprüche 1 bis 4, **dadurch gekennzeichnet, dass** die Verstärkungselemente (13) eine Höhe von mehr als 1 mm, vorzugsweise mehr als 1,5 mm, insbesondere mehr als 2 mm, und aber weniger als 10 mm, vorzugsweise weniger als 8 mm, insbesondere weniger als 6 mm, aufweisen.

6. Membrananordnung nach einem der Ansprüche 1 bis 5, **dadurch gekennzeichnet, dass** der Querschnitt der Verstärkungselemente (13) rund, eckig, rechteckig oder quadratisch ausgebildet ist.

7. Membrananordnung nach einem der Ansprüche 1 bis 6, **dadurch gekennzeichnet, dass** die Verstärkungselemente (13) von zwei Lagen (11, 12) umschlossen sind.

8. Membrananordnung nach einem der Ansprüche 1 bis 7, **dadurch gekennzeichnet, dass** die Verstärkungselemente (13) Aussparungen (16) zur Erzeugung einer formschlüssigen Verbindung mit den Lagen (11, 12) aufweisen.

9. Membrananordnung nach einem der Ansprüche 1 bis 8, **dadurch gekennzeichnet, dass** die Verstärkungselemente (13) mit der Membranschraube (14) einstückig ausgebildet sind.

10. Membrananordnung nach einem der Ansprüche 1 bis 9, **dadurch gekennzeichnet, dass** die Membran (5) mehr als drei, vorzugsweise mehr als vier, insbesondere mehr als fünf, Verstärkungselemente (13) aufweist.

11. Membrananordnung nach einem der Ansprüche 1 bis 10, **dadurch gekennzeichnet, dass** die Verstärkungselemente (13) Verzweigungen (20) aufweisen.

12. Membrananordnung nach Anspruch 11, **dadurch gekennzeichnet, dass** die verzweigten Verstärkungselemente (22) mindestens einen Bogen (21) von mehr als 90 °, vorzugsweise mehr als 120 °, insbesondere mehr als 150 °, aufweisen.

13. Membrananordnung nach einem der Ansprüche 1 bis 12, **dadurch gekennzeichnet, dass** die Verstärkungselemente (13) und ein Einspannrahmen (19) einstückig ausgebildet sind.

14. Membrananordnung nach einem der Ansprüche 1 bis 13, **dadurch gekennzeichnet, dass** die Verstärkungselemente (13) eine konzentrische, kreisförmige Erstreckung von der Membranschraube (14) bis zu einem äußeren ringförmigen Element (15) aufweisen.

15. Membrananordnung nach einem der Ansprüche 1 bis 14, **dadurch gekennzeichnet, dass** die Verstärkungselemente (13) spiralförmig ausgebildet sind.

16. Membrananordnung nach einem der Ansprüche 1 bis 15, **dadurch gekennzeichnet, dass** die Membranschraube (14) und die Verstärkungselemente (13) aus einem metallischen Werkstoff oder einem Hochleistungskunststoff gebildet werden.

17. Membrananordnung nach einem der Ansprüche 1 bis 16, **dadurch gekennzeichnet, dass** die radial nach außen verlaufenden Verstärkungselemente (13) und/oder das äußere ringförmige Element (15) vorzugsweise keilförmige Elemente (23) zur Erhöhung der Dichtheit aufweisen.
